# EUROPEAN PATENT APPLICATION

(11) **EP 4 693 039 A2**
(43) Date of publication of application: **11.02.2026**
(21) Application number: 24785341.9
(22) Date of filing: 05.04.2024
(51) Int. Cl.: G06F 9/455, G06F 9/50, H04W 4/40, H04W 88/18, G08G 1/01

(54) **METHOD FOR DATA PROCESSING IN INTELLIGENT TRANSPORTATION SYSTEM, AND DEVICE FOR PERFORMING SAME**

(30) Priority: 06.04.2023 KR 20230045302; 12.10.2023 KR 20230135964
(71) Applicant: LG Electronics Inc., Yeongdeungpo-gu Seoul 07336 (KR)
(72) Inventor: LEE, Yoonjong, Seoul 06772 (KR); SEO, Hanbyul, Seoul 06772 (KR); SONG, Min, Seoul 06772 (KR); KIM, Myoungseob, Seoul 06772 (KR)
(74) Representative: Mooser, Sebastian Thomas
(86) International application number: PCT/KR2024/004559
(87) International publication number: WO 2024/210644

(57) **Abstract**

A method by which a first network node transmits information to a second network node in an intelligent transportation system (ITS), according to various embodiments, may comprise: processing information on first objects moving in a first area monitored by the first network node; on the basis of the processing result, obtaining first prediction information on a processing load expected to be caused by the first objects in a second area at least partially contacting the first area; and transmitting the first prediction information to the second network node monitoring the second area.

## Description

### TECHNICAL FIELD

The present disclosure relates to an intelligent transportation system (ITS), and more specifically, to a method and apparatus for processing data related to moving objects in an ITS.

### BACKGROUND

Edge computing is a critical topic in vehicle-to-everything (V2X) use cases. This is because low latency and high stability should be ensured eventually in many cases. In these cases, a vast amount of data are processed and delivered using computing resources in an adjacent local area, rather than they are associated with a remote cloud service over the Internet. This approach significantly enhances the efficiency of large-scale data processing. Multi-access edge computing (MEC) used for this purpose is a general framework which allows an MEC application to be implemented by a software-only entity executed on virtualized infrastructure located at or near a network edge.

Future MEC-based V2X services should guarantee availability at all times and under all conditions, which means sufficient MEC resources should be allocated in a timely manner to meet computing resource requirements. Failure to do so may pose a significant safety risk when these services are used in safety-related solutions. From an economic perspective, operational costs associated with idle resources should also be considered in MEC resource allocation.

The MEC architecture for V2X services will adopt a server-MEC-client model rather than the traditional server-client structure. Herein, a server refers to a far server or remote server, and a hybrid cloud structure combining a near server or on-premise structure with a multi-cloud may be considered for MEC. When critical data management is required by governments or public institutions, specific types of data should be stored on physical servers rather than in a cloud, and the hybrid cloud architecture allows the use of a public cloud for workflows other than data management. This prevents exposure of servers requiring high security while enabling users to benefit from auto-scaling (a service that monitors system resource values like a CPU, memory, a disk, and network traffic to automatically adjust a server size) or receive dynamically allocated resources. This allows users to effectively respond to unexpected service loads and achieve cost savings.

A key variable for predicting dynamic resource allocation in MEC-based V2X services is the number of connected objects that the MEC needs to connect to or handle. This variability in demand occurs primarily when vehicles move from one area to another over time, reflecting an overall traffic density changing in space or time.

When considering the above variables, dynamic resource allocation should be based on the accurate number of objects that need to be analyzed for V2X services. Since it takes approximately several minutes (e.g., 10 minutes) to scale computing resources up or down to reflect derived results, a resource allocation technology is required that uses machine learning algorithms to proactively predict the number of objects to be connected or processed and responds preemptively by monitoring a service status, rather than a real-time (reactive) allocation method.

To minimize transmission delays, resources should be allocated based on location information, and services should be deployed in the MEC-based V2X service environment. This is because, for example, when service chains are configured with computing resources in different locations, performance issues may occur. Therefore, an MEC/RSU computing environment for V2X services should be organized such that short-range service clusters are configured based on locations, and a service flow entering a cluster is serviced within that cluster as much as possible or handed over to the nearest possible cluster, if the service within the same cluster is not possible.

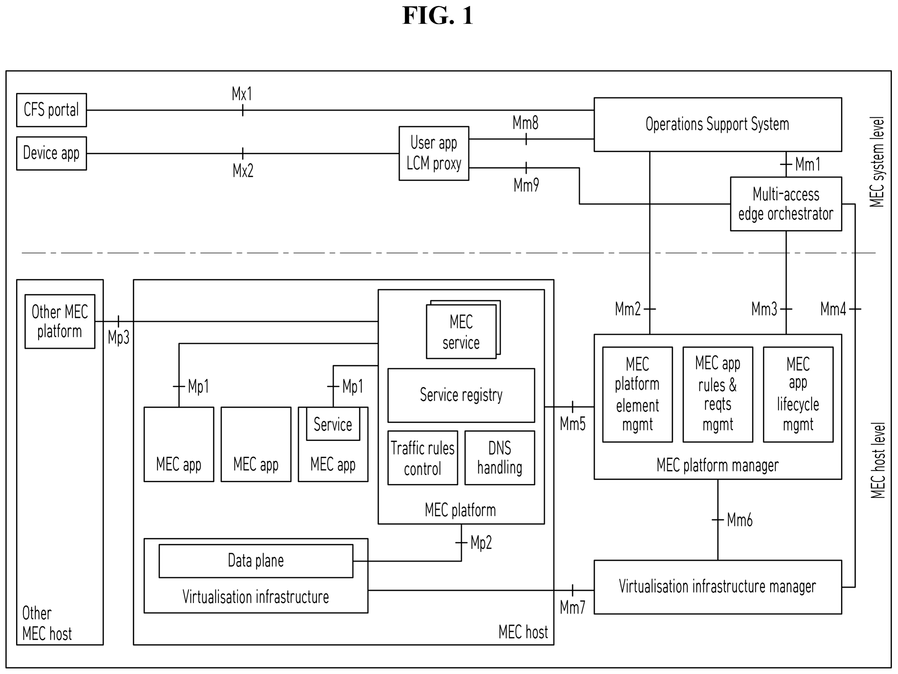

This operation is being developed and standardized under a European Telecommunications Standards Institute (ETSI) MEC framework, which adds edge computing capabilities to 5G mobile communication systems. Referring to FIG. 1, the MEC framework may be divided into a system-level MEC entity, a host-level MEC entity, and a network-level MEC entity.

The host-level MEC entity includes a MEC platform manager and a virtualized infrastructure manager (VIM). The VIM is responsible for (i) allocating, managing, and releasing virtualized resources (computing, storage, and networking) of virtualized infrastructure, (ii) preparing the virtualized infrastructure for software image execution, wherein the preparation includes infrastructure configuration and may include software image reception and storage, (iii) collecting and reporting performance and error information for the virtualized resources, and (iv) relocating applications, if supported, wherein the VIM reallocates the applications with an external cloud environment by interacting with external cloud managers.

As such, MEC-based V2X services are performed based on support of functions such as the VIM, and in this process, dynamic allocation and release of computing resources may occur frequently.

### DISCLOSURE

### TECHNICAL PROBLEM

An object of the present disclosure is to perform data processing related to moving objects more accurately and efficiently in an intelligent transportation system (ITS).

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

According to an aspect, a method for transmitting information to a second network node by a first network node in an intelligent transportation system (ITS) may include processing information regarding first objects moving in a first area monitored by the first network node, based on a result of the processing, obtaining first prediction information regarding a processing load expected to be caused by the first objects in a second area at least partially contacting the first area, and transmitting the first prediction information to the second network node monitoring the second area.

The first network nodes may receive second prediction information from the second network node.

The second prediction information may be about a processing load expected to be caused by second objects moving in the second area, with respect to the first area.

Processing resources of the first network node may be adjusted based on the second prediction information.

The processing resources may include at least one of a central processing unit (CPU) for cloud computing, random access memory (RAM), a network speed, or a storage access speed.

The processing load expected to be caused by the second objects with respect to the first area may be calculated based on at least one of a location, direction, speed, or detection priority of each of the second objects, obtained from the second prediction information.

The first prediction information may relate to a processing load expected to be caused by the first objects within a time duration less than a threshold from a current time.

The first objects may include at least one of a terminal, a vehicle, or a road side unit (RSU), moving in the first area.

Based on a first event related to object detection not occurring in the first area for a specific time, the monitoring of the first area by the first network node may be deactivated.

The first network node may receive sensing information related to the first area from an external device, after the deactivation of the monitoring of the first area.

Based on a second event being detected through the sensing information, the monitoring of the first area by the first network node may be resumed.

According to another aspect, a computer-readable recording medium on which a program for performing the above method is recorded may be provided.

According to another aspect, a first network node operating in an ITS may include a memory storing instructions, and a processor performing operations by executing the instructions. The operations of the processor may include processing information regarding first objects moving in a first area monitored by the first network node, based on a result of the processing, obtaining first prediction information regarding a processing load expected to be caused by the first objects in a second area at least partially contacting the first area, and transmitting the first prediction information to a second network node monitoring the second area.

The first network node may be a server that monitors a terminal, a vehicle, or an RSU, moving in the first area.

### ADVANTAGEOUS EFFECTS

According to an embodiment of the present disclosure, data processing related to moving objects may be performed more accurately and efficiently in an intelligent transportation system (ITS.)

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

FIG. 1 illustrates an exemplary mobile edge computing (MEC) structure.
FIG. 2 is a diagram for explaining by comparing vehicle-to-everything (V2X) communication based on radio access technology (RAT) before New Radio (NR) and V2X communication based on NR.
FIG. 3 illustrates a radio protocol architecture for sidelink (SL) communication.
FIG. 4 illustrates UEs performing V2X or SL communication.
FIG. 5 is a diagram illustrating general auto-scaling.
FIG. 6 illustrates exemplary sharing of an entire object status monitoring metric structure.
FIG. 7 illustrates an exemplary entire object status monitoring metric database structure.
FIG. 8 illustrates an exemplary predicted object status monitoring metric structure.
FIG. 9 illustrates an exemplary predicted object status monitoring metric database structure.
FIG. 10 illustrates moving average values versus numbers of occurring objects.
FIG. 11 and FIG. 12 are exemplary cases where the number of objects is increasing sufficiently to cause a load compared to a maximum number of objects allowed by current computing resources.
FIG. 13 illustrates data processing based on load prediction for moving objects.
FIG. 14 illustrates detected data including a video.
FIG. 15 illustrates a method for transmitting information to a second network node by a first network node in an intelligent transportation system (ITS).
FIG. 16 illustrates a communication system applied to the present disclosure.
FIG. 17 illustrates wireless devices applicable to the present disclosure.
FIG. 18 illustrates another example of a wireless device to which the present disclosure is applied.
FIG. 19 illustrates a vehicle or an autonomous driving vehicle applied to the present disclosure.

### DETAILED DESCRIPTION

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between UEs without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

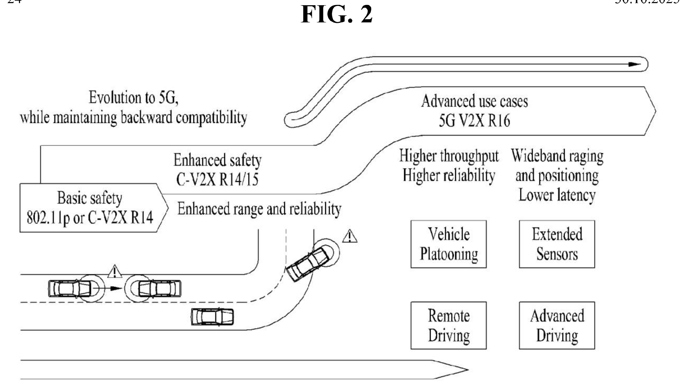

FIG. 2 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

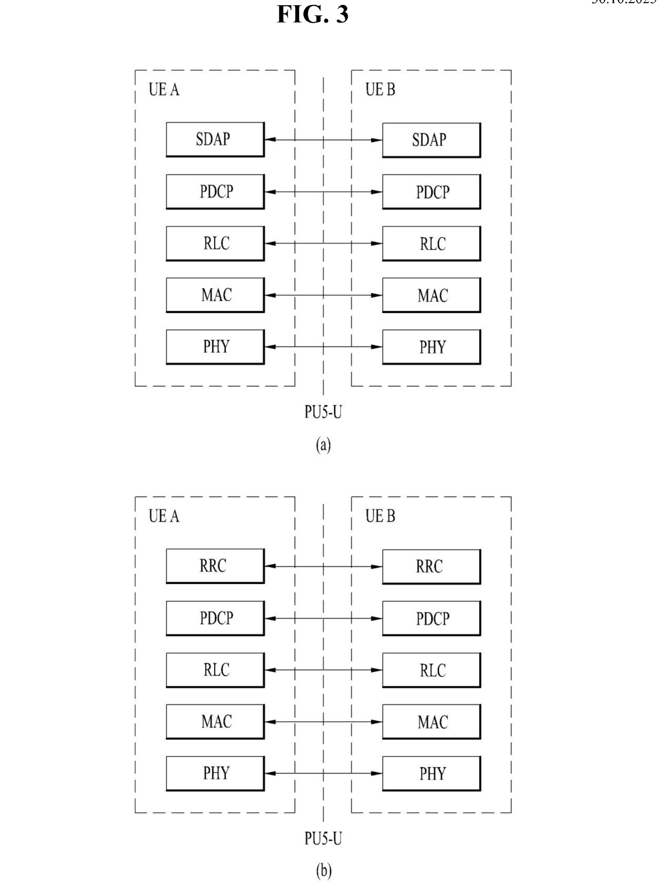

FIG. 3 illustrates a radio protocol architecture for SL communication. Specifically, FIG. 3-(a) shows a user plane protocol stack of NR, and FIG. 3-(b) shows a control plane protocol stack of NR.

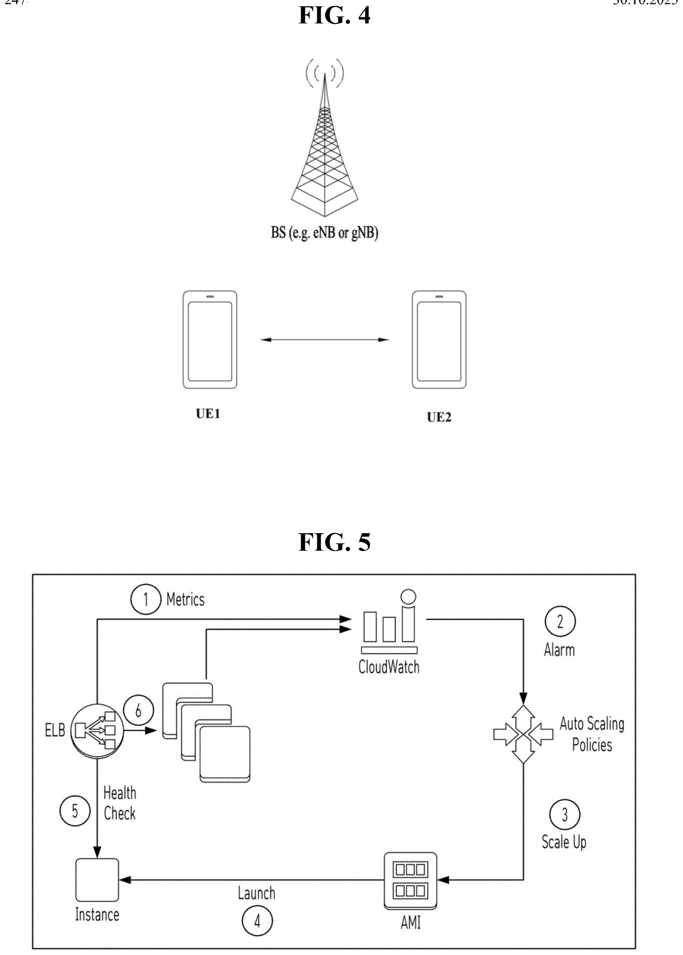

FIG. 4 illustrates UEs performing V2X or SL communication.

Referring to FIG. 4, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

### Predictive Processing of Processing Load Between Infrastructure Domains Caused by Object Terminal Movement

A description will be given of dynamic resource management information and its application methods of an MEC/RSU, for predictive processing of a processing load between infrastructure domains caused by movement of V2X object terminals.

To identify factors that may affect the load, the RSU/MEC should be able to analyze dynamic status information (information about the number, locations, speeds, and so on of moving service-requesting objects) about all V2X service objects currently in its sensing/cluster area or those predicted to move to an adjacent area in a short time, and services being processed (e.g., object detection, message exchange, and event warnings), structure the information in a categorized visual metric format, update the categorized visual metric information structure in real time, and share it with a neighboring RSU/MEC.

The RSU/MEC derives, from a shared metric table, the total number and movement trends of objects passing through a point (boundary or a certain distance outside the boundary) through which they are anticipated to move from a neighboring RSU/MEC into its area, and reflect them in system metrics of an RSU/MEC auto-scale platform for monitoring a condition for performing auto-scaling.

During monitoring, in response to a system metric exceeding a specific threshold, a desired change in a computing resource capacity (or, in some cases, minimum and maximum sizes) through auto-scaling may be set according to the current policy of the RSU/MEC auto-scale platform. This allows server instance resources to be dynamically increased or decreased, for allocation.

### 1. System Metric for Determining Typical Auto-Scaling Trigger Criterion

Auto-scaling (auto scaling) is a technology that monitors system metric values, which are information about the amount of cloud resources used by system resources such as a CPU, memory, a disk, and network traffic, and when a system metric value of a virtual server included in an auto-scaling group exceeds a specified threshold, automatically adjusts the size of the server.

An example of system metrics for determining an auto-scaling trigger criterion is illustrated in Table 1.

**[Table 1]**

| **Monitoring Item** | **Detail Item** | **Criterion Example** |
|---|---|---|
| **CPU** | Usage (%) | Scale-Out when reaching 60% load, Scale-In when below 40% |
| **RAM** | Usage (%) | Scale-Out when reaching 60% load, Scale-In when below 30% |
| **Network** | In/Out (Bytes or Packets) | For each, Scale-Out when generated packets exceeds 1 Gbps, Scale-In when below 100 Mbps |
| **Disk I/O** | Read/Write (Bytes or Operation) | For each, Scale-Out when access count exceeds 100,000,000, Scale-In when below 1,000 |
| Average Load Duration | Minutes, Hours | Scale-Out when it lasts for 10 minutes or longer |
| Load Occurrence Count | Occurrence Count | Scale-Out when it occurs 4 or more times |

The CPU usage may be measured as a percentage, and the network usage may be determined by the number of input/output bytes or the size of input/output packets. Further, the average load duration may be set in units of 5, 10, or 15 minutes. For disk performance, a more precise metric may be used by measuring the actual number of bytes read/written from/on a disk and the number of disk access operations, rather than a simple percentage.

There are two auto-scaling methods: auto-scale up/down and auto-scale in/out. Auto-scale up/down (i.e., vertical scaling) means upgrading (or downgrading) an existing computing server to a higher (or lower) specification, such as adding/removing a disk or upgrading/downgrading a CPU or memory. Auto-scale in/out (i.e., horizontal scaling) means adding (or reducing) servers of a specification similar to that of an existing computer server to distribute a data capacity and load, thereby improving (or decreasing) performance.

For simple speed and accuracy improvements, auto-scale up/down, which only adjusts specifications, may be effective. However, for an application environment requiring analytical processing like object detection or machine learning, which involves a significant amount of data and complex queries, an auto-scale in/out configuration may be more effective.

A load balancer is essential for this auto-scaling configuration, distributing incoming service requests among multiple servers within computing resources.

Various cloud service vendors (e.g., Amazon Web Services, Google Cloud Platform, and Microsoft Azure) now offer this auto-scaling capability. When an auto-scaling policy is set using a resource management function, the policy is applied to allocated cloud servers. This ensures a stable and flexible service by keeping the number of servers at a minimum when a system metric value is equal to or less than a threshold for a specific time, and by scaling it up when a load occurs.

When an auto-scaling request is generated, cloud infrastructure allocates additional resources based on the set policy and configuration. This process typically takes a few minutes, during which existing resources remain available. Once new resources are allocated, an application or system begins using them to process an increased workload. The new resources may be added gradually or in batches, according to the policy and implementation details. The exact behavior of auto-scaling may vary depending on a specific implementation and a used cloud provider. For details on how auto-scaling works in that environment, the documentation and support resources provided by the cloud provider should be referred to.

FIG. 5 is a diagram illustrating general auto-scaling.

Referring to FIG. 5, auto-scaling may be performed as follows.
0) Auto-Scaling Policy Setting - In response to a system metric exceeding a specific threshold, a desired change in a computing resource capacity (or, in some cases, minimum and maximum sizes) through auto-scaling is specified.
1) Network information of a load balancer and system resource metric information of a server are collected every predetermined period by a monitoring service.
2) Upon detection that a threshold condition specified in the monitoring service in Step 0 is not met (e.g., above/below/exceeding/less than), the auto-scaling policy is initiated.
3) The number of virtual server instances is increased or decreased (an increase/decrease ratio algorithm may vary depending on service-supporting vendors).
4) Allocation of server instances that match the set policy setting value is initiated. To ensure quick provisioning allocation, the same image shape specifications as the current computing resources are typically used.
5) It is verified whether instances connected to an auto-scaling group function properly. It is checked whether instances exist and are accessible (e.g., HTTP Ping Test, 200 OK response, and so on) or whether instances exist and are in service along with a connected load balancer.
6) Upon completion of verifying the server status, a server is added to the load balancer and starts to process requested traffic like other servers.

### 2. Reflecting Current Number of Sensed/Clustered Objects of RSU/MEC into System Metric

### 2.1 Aggregating Number of Objects Moving in Short Time that May Affect Load

As described before, from the perspective of MEC-based V2X services, a key variable for predicting dynamic resource allocation is the number of connected objects that the MEC needs to connect to or process. Herein, connected objects refer to devices or entities (e.g., vehicles, scooters, bicycles, kickboards, or pedestrians) that use V2X message exchange-capable terminals based on short/long range communication or have such functions, which are currently being serviced by or soon to require services from the RSU/MEC. The MEC/RSU may also recognize these connected objects through data fusion of information sensed by an object detection function equipped in the RSU/MEC and V2X messages, as well as V2X message exchange based on short/long range communication. However, when a matching rate between movement and status information included in V2X messages of these objects and information sensed through the object detection function is less than, or equal to or less than a system-set reference value, it may not be included as a load factor due to low accuracy.

While not as critical as the number of connected objects, the number of unconnected objects that may affect the service purpose and type of the MEC/RSU may also be considered. Although these unconnected objects do not have the ability to exchange information with the RSU/MEC, V2X messages that adjacent connected objects generate by sensing the unconnected objects or information sensed about the unconnected objects by the object detection function of the RSU/MEC may be delivered to the MEC/RSU, and the unconnected objects may be recognized as objects (e.g., vehicles, scooters, bicycles, kickboards, or pedestrians).

In summary, to identify main factors affecting the MEC/RSU load, current statistical data including V2X messages based on short/long range communication from connected objects in a current MEC/RSU area, object detection sensing results for the connected objects, V2X messages created from sensed information about unconnected objects, and object detection sensing results for the unconnected objects should be transmitted to an adjacent MEC/RSU. However, transmitting the entire collected statistical data may result in an excessive data size. Therefore, measured values for the connected and unconnected objects, such as the total number, service priorities, locations, directions, and speeds of them, should be categorized and grouped to create a visualized metric structure.

Table 2 below provides an example of an object status monitoring metric structure in an RSU/MEC area. Exemplary categorization in Table 2 is "Object Type > Source (data source) > Priority (service priority) > Location (location information) > Direction (travel direction) > Speed." When a data source is Object Detection or V2X, a value obtained from that source is displayed. When there are multiple sources, all may be displayed. This categorization method or data format may be changed based on various attributes depending on the purpose or type of a supported service, and information about the number of categorized objects needs to be displayed eventually.

**[Table 2]**

| **Object Type** | **Source** | **Object** | **Priority** | **Location <MSG>** | **Direction <MSG>** | **Speed <MSG>** | **Location (Sensing)** | **Direction (Sensing)** | **Speed (Sensing)** | **Counts** |
|---|---|---|---|---|---|---|---|---|---|---|
| Connected Object | V2X MSG | Vehicle | High | Zone1 | South East | 80 ~ 90 | - | - | - | **10** |
| | | Vehicle | Low | Zone2 | South East | 80 ~ 90 | - | - | - | **20** |
| | Object Detection W/ V2X MSG | Vehicle | High | Zone2 | South East | 80 ~ 90 | Zone2 | South East | 80 ~ 90 | **15** |
| | | Scooter | High | Zone2 | South East | 40 ~ 50 | Zone2 | South East | 40 ~ 50 | **3** |
| Un-Connected Object | Proxy V2X MSG | Vehicle | High | Zone1 | South East | 70 ~ 80 | - | - | - | **30** |
| | | e-Bike | High | Zone1 | North East | 20 ~ 30 | - | - | - | **20** |
| | Object Detection | Vehicle | High | - | - | - | Zone1 | South East | 90 ~ 100 | **10** |
| | | Pedestrian | High | - | - | - | Zone1 | North East | 0 ~ 10 | **25** |

Every RSU/MEC should be able to categorize and update object information in its area in real time and share it with a neighboring RSU/MEC by using visually structured metric table information indicating the status of objects within a current area.

There may be various ways to share such a data structure in real time, and various data formats. Representative linkage methods may include message protocol broker linkage and open API linkage, and data formats like JSON and XML may be considered. Further, sharing between non-adjacent areas may be avoided if unnecessary.

The main purpose of an RSU/MEC categorizing, updating, and transmitting its object information to a neighboring RSU/MEC is to predict a change in objects that will move in a short time. To achieve this, a metric structure for monitoring an object status within the area of the receiving RSU/MEC may include examples like Case 1 and Case 2 below, and the method for predicting objects moving into its area in a short time may also vary accordingly.

### (Case 1)

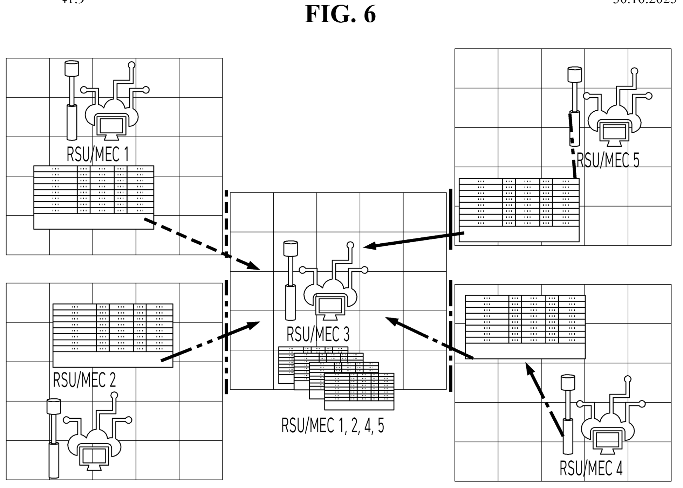

FIG. 6 illustrates an example of sharing an entire object status monitoring metric structure based on Case 1.

Referring to FIG. 6, a monitoring device in a corresponding area receives entire object status monitoring metric structure information from an adjacent area. The monitoring device directly predicts objects that will move from the adjacent area into its own area by using the information.

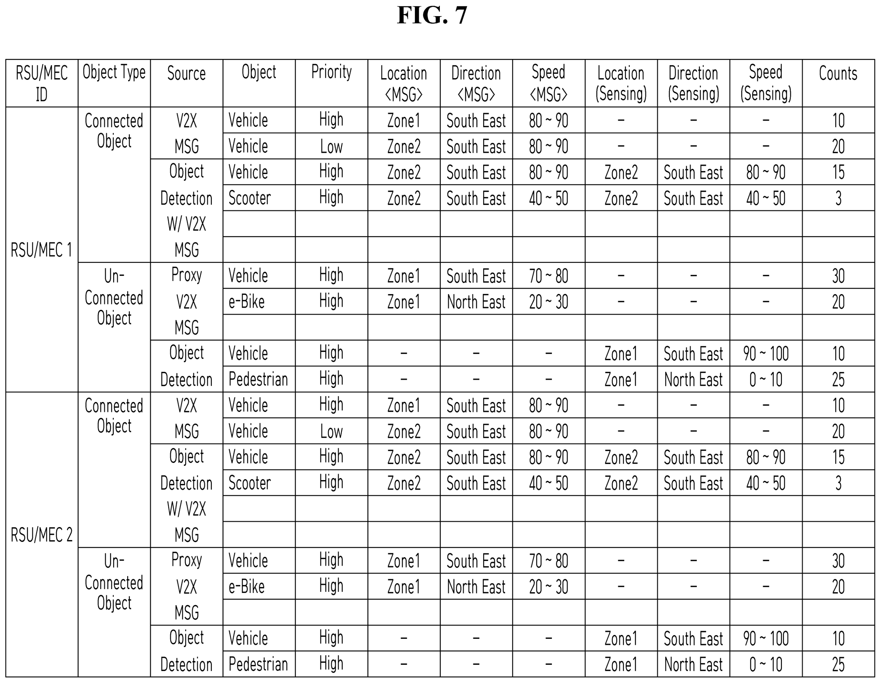

FIG. 7 illustrates an entire object status monitoring metric database structure based on Case 1.

When the monitoring device receives entire information, a data size may be large depending on the number of adjacent MECs/RSUs and the number of occurring objects. However, there is no need for considering network linkage latency for prediction.

### (Case 2)

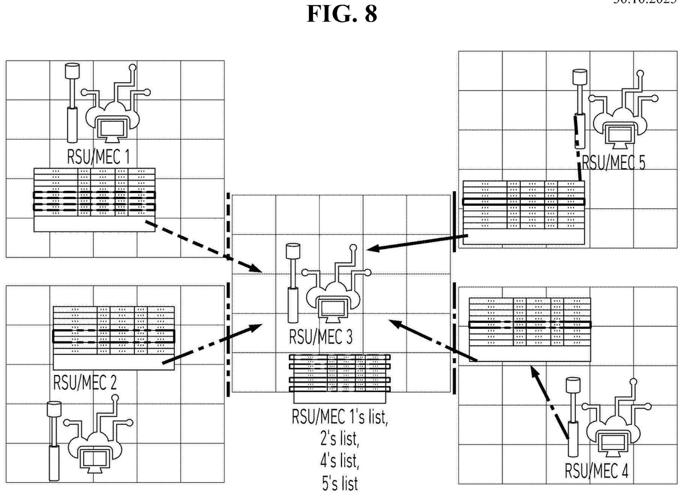

FIG. 8 illustrates an exemplary predicted object status monitoring metric structure based on Case 2.

An RSU/MEC predicts objects which will move from its area into an adjacent area in a short time by using object status monitoring metric structure information about the current area, extract only this result, and transmit it as object status monitoring metric structure information. A receiving RSU/MEC does not need to perform the process of predicting objects that will move in a short time.

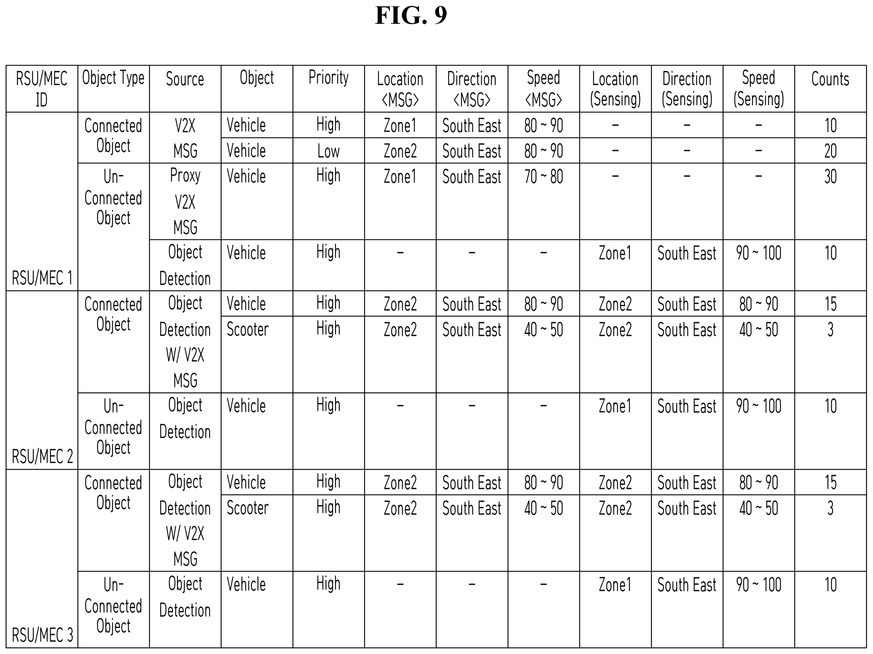

FIG. 9 illustrates a predicted object status monitoring metric database structure based on Case 2.

In the case of FIG. 9, although the size of processed data is reduced, network linkage latency for prediction may need to be considered.

### 2.1.1 Criteria for Determining Short-Term Moving Objects from Entire Object Status Monitoring Metric Structure

It is necessary to have criteria to determine objects which will move from an adjacent area into a current area in a short time by using entire object status monitoring metric structure information received from the adjacent area. The present disclosure proposes the following criteria examples. When an object satisfies these criteria, it is considered a moving object within the area. The following criteria may be further quantified and refined depending on a service purpose and type.
1) Location of Object from Current Area - An object confidence weight is assigned to the object based on whether it is in a boundary area (1) or near the boundary area (2) and its distance from the boundary or the vicinity of the boundary area.
   Example: > 20 km: 10% / 5-20 km: 50% / < 5 km: 80%
2) Direction of Object from Current Area - An object confidence weight is assigned based on whether it is moving towards the current area, and the angular error of its direction.
   Example: > 180° (opposite direction): 10% / 90-30°: 50% / 30-0°: 80%
3) Speed of Object from Current Area - When the object is moving toward the current area, an object identification confidence weight is assigned when its speed is high.
   Example: < 30 km/h: 10% / 30-80 km/h: 50% / > 80 km/h: 80%
4) Object Detection Priority - An object identification confidence weight is assigned based on its high/low priority.
   Example: Low: 10% / Middle: 50% / High: 80%

Final determination criterion example: When the average of all confidence items is 70% or more.

The following are examples of criteria for excluding an object from being considered a short-term moving object.
1) The object fails to meet a threshold.
2) Data inconsistency is detected in values obtained from multiple sources (e.g., V2X message and object detection).

### 2.1.2 Criteria for Determining Short-Term Moving Objects from Predicted Object Status Monitoring Metric Structure

It is also necessary to have criteria to determine objects which will move to an adjacent area in a short time by using object status monitoring metric structure information obtained from a current area. In the present disclosure, objects are considered to be moving to an adjacent area if they satisfy the same or similar criteria proposed in 2.1.1 (e.g., the location, direction, speed, and object detection priority of an object from an adjacent area). Likewise, these criteria may be quantified and refined based on a service purpose and type, and the criteria for excluding an object from being considered to be a short-term moving object proposed above may be applied to prediction.

### 2.2 Adding System Metrics of Objects Predicted as Moving for Triggering Auto-Scaling

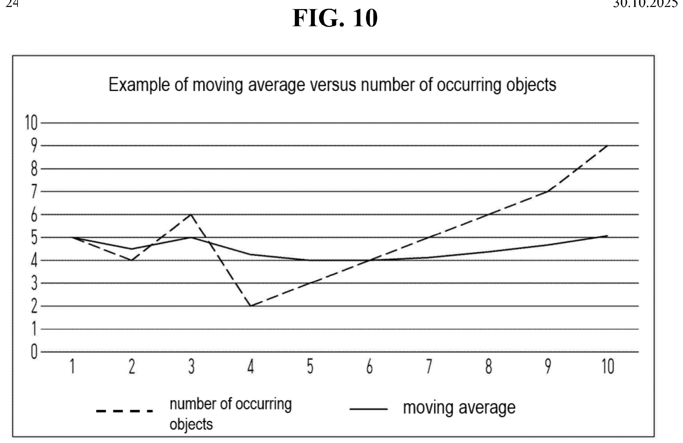

Based on whether the conditions of the above items are met and a high confidence result is obtained, an RSU/MEC-based V2X service infrastructure entity should not only determine objects moving into its area as a load but also constantly be aware of a maximum number of objects that its current computing resources may handle for comparison. To identify the trend of increase or decrease in the determined number of these objects, it calculates a moving average. FIG. 10 illustrates an example of moving average values versus numbers of occurring objects.

The result of the calculation should be dynamically included in the system metrics of the RSU/MEC auto-scale platform, along with the number of objects expected to move in a short time, to be used as a value for determining an auto-scaling triggering criterion.

Table 3 illustrates an example of auto-scaling system metrics that include information about moving objects.

**[Table 3]**

| Monitoring Item | Detail Item | Criterion Example |
|---|---|---|
| CPU | Usage (%) | Scale-Out when reaching 60% load, Scale-In when below 40% |
| RAM | Usage (%) | Scale-Out when reaching 60% load; Scale-In when below 30% |
| Network | In/Out (Bytes or Packets) | For each, Scale-Out when packets exceed 1 Gbps, Scale-In when below 100 Mbps |
| Disk I/O | Read/Write (Bytes or Operation) | For each, Scale-Out when access count exceeds 100,000,000, Scale-In when below 1,000 |
| Average Load Duration | Minutes, Hours | Scale-Out when it lasts for 10 minutes or longer |
| Load Occurrence Count | Occurrence Count | Scale-Out when it occurs 4 or more times |
| Moving Average of Generated Objects in Adjacent Area | Moving Average of Generated Objects in Adjacent Area | Scale out, when moving average of occurring objects in adjacent area increases 5 or more times, and the number of occurring objects in adjacent area also increases 5 or more times, |
| Number of Generated Objects in Adjacent Area | Number of Generated Objects in Adjacent Area | When the sum of the number of currently processed objects and the number of occurring objects in adjacent area exceeds maximum number of objects allowed by current computing resources |

### 2.3 Time for Determining that Threshold of Moving Objects is Exceeded, for Auto-Scaling Triggering

When updating its system metrics with the number of occurring objects, the RSU/MEC should determine a time point at which the number of objects, which poses a high risk of affecting the load, is counted. A detailed description will be given below of the types and examples of high-risk time points at which the number of objects is increasing sufficiently to create a load, compared to the maximum number of objects allowed by the current computing resources.

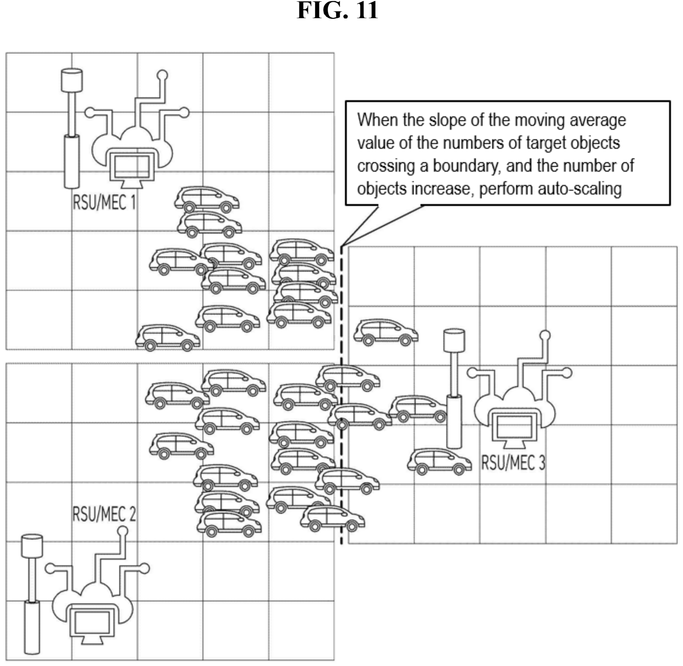

FIG. 11 illustrates a case where a time point at which the slope of the moving average of the numbers of target objects and the number of objects increase corresponds to a boundary between an RSU/MEC and its adjacent RSU/MEC.

When the number of occurring objects at the boundary between the current RSU/MEC sensing/cluster area and the adjacent area is predicted to exceed the maximum computing resource capacity and affect the load upon entering the current area, auto-scaling is performed.

At this time point, there is a disadvantage that a time required to perform auto-scaling and allocate new resources may be insufficient. However, there is an advantage in that the change in the number of objects expected to cause a load is small, and thus dynamic computing resources may be allocated precisely for the anticipated load.

To trigger auto-scaling based on the boundary, a location determination criterion should be set to the boundary area in determining objects expected to move in a short time in an object status monitoring metric structure.

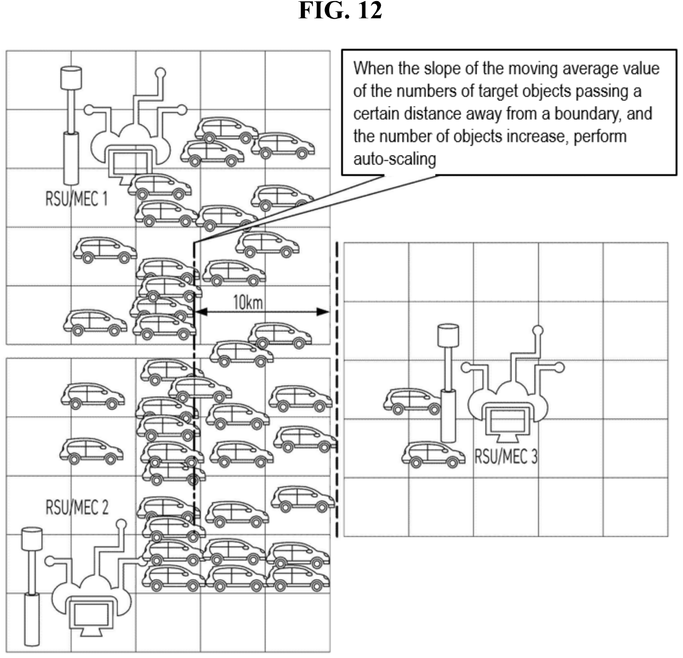

FIG. 12 illustrates a case where a time point at which the slope of the moving average of the numbers of target objects and the number of objects increase corresponds to a location at a specific distance (e.g., 10km) outside the boundary of the RSU/MEC and its adjacent RSU/MEC.

When the number of objects located at a specific distance outside the boundary of the current RSU/MEC sensing/cluster area and the adjacent area is predicted to exceed the maximum computing resource capacity and affect the load upon entering the current area, auto-scaling is performed.

At this time point, there is a disadvantage that the change in the number of objects expected to cause a load may be large, making it difficult to accurately allocate dynamic computing resources for the anticipated load. However, there is an advantage in that auto-scaling may cover a point farther away from the boundary and more time may be secured to perform auto-scaling and allocate new resources.

To perform auto-scaling based on a specific distance from the boundary of the area, an object location determination criterion should be set to the location at the specific distance outside the boundary area in determining objects expected to move in a short time in an object status monitoring metric structure.

### 3. Updating Policy for RSU/MEC Sensing/Cluster Auto-Scaling

When monitoring items that do not meet thresholds are being updated by reflecting the number of objects in the current RSU/MEC sensing/cluster area in the system metrics, an auto-scaling policy to be operated in response to this should be configured on the RSU/MEC auto-scale platform. This process defines how many virtual servers to add when auto-scale-out occurs and how many virtual servers to reduce when scale-in occurs. These may be defined as a number or a ratio, and various settings are possible depending on operating system conditions. For reference, scaling may be configured in various ways by vendor, such as manual, automatic, on-demand, or predictive. However, the proposed method of the present disclosure is a dynamic scaling approach that pre-allocates an auto-scaling server instance capacity based on an increase/decrease in the variable number of V2X objects. Therefore, it requires a flexible policy update method, not a scaling policy within a fixed instance capacity range. For example, it may be linked with a script-based automation platform using a command line interface (CLI).

To help with understanding, an example of scale-out policy settings is described below.
- Default number of computing server instances = 4
- Maximum number of objects allowed by default computing server instances = 12
- Computing resource to object exchange ratio = 1:3
- Requested number of computing server instances to increase = (number of currently processed objects + number of additional objects) / 3

Example: If the number of currently processed objects + additional objects = 18, the required number of instances to increase is 18/3 = 6, requiring a request to add 2 instances to the default number (4).

For example, when a large number of objects are predicted to move from the current RSU/MEC sensing/cluster area to the adjacent RSU/MEC sensing/cluster area in a short time, information related to the number, locations, and speeds of these objects, as well as services being processed (e.g., object detection, message exchange, and event alerts), may be transmitted to the adjacent RSU/MEC so that a service flow is handed over through resource allocation.

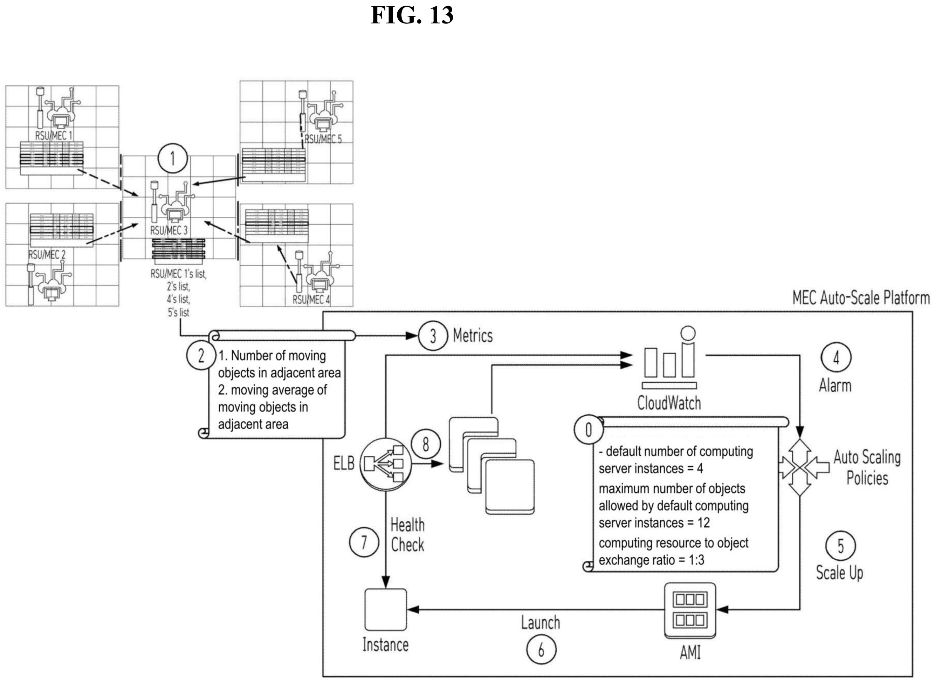

FIG. 13 illustrates data processing based on load prediction for moving objects.
0) Auto Scaling Policy Setting - In response to a system metric exceeding a specific threshold, a desired change in a computing resource capacity (or, in some cases, minimum and maximum sizes) through auto-scaling is specified on the RSU/MEC auto-scale platform. - "Refer to 3. Updating Policy for RSU/MEC Sensing/Cluster Auto-Scaling".
1) The RSU/MEC analyzes object information in its area in real time, updates metric table information about all objects or objects expected to move into the adjacent area in a short time, and shares it with the adjacent RSU/MEC in real time.
2) From the received metric table information, the total number and moving average of objects passing through a point (a boundary, or a specific distance from the boundary), through which the objects generated in the adjacent RSU/MEC are expected to move into its area, are derived and reflected in the system metrics of the RSU/MEC auto-scale platform.
3) Network information of a load balancer and system resource metric indicator information of a server are collected every predetermined period by a monitoring service.
4) Upon detection that a threshold condition specified in the monitoring service in Step 0 is not met (e.g., above/below/exceeding/less than), the auto-scaling policy is initiated.
5) The number of virtual server instances is increased or decreased.
6) Allocation of server instances that match the set policy setting value is initiated. To ensure quick provisioning allocation, the same image shape specifications as the current computing resources are typically set and used.
7) It is verified whether instances connected to an auto-scaling group function properly. It is checked whether instances exist and are accessible (e.g., HTTP Ping Test, 200 OK response, and so on) or whether instances exist and are in service along with a connected load balancer.
8) Upon completion of verifying the server status, a server is added to the load balancer and starts to process requested traffic like other servers.

### Object Detection Processing Method for Specific Image Area by Priority

Object detection is a function of, when an input image is given, performing classification and localization for all categories existing in the image. This object detection function is installed in a smart CCTV or a smart RSU and used in areas requiring traffic safety, for example, for detecting and identifying moving pedestrians or vehicles through camera sensors, collecting vehicle driving information, or predicting collisions.

This object recognition function has recently been greatly improved in the performance of image analysis technology such as object and scene recognition due to the recent development of deep learning technology, and most technologies require a structure based on a high-performance GPU server application environment.

Machine learning-based object detection schemes are largely divided into a two-stage scheme and a single-stage scheme depending on their structures.

In the two-stage scheme, object detection is performed in two stages: a stage for detecting object candidate regions (regions of interest (ROIs)) in an image by selective search and a region proposal network, and a stage for performing class classification and bounding box regression on the detected candidates. A representative two-stage scheme is faster R-CNN.

In the single-stage scheme, object detection is performed with a single deep learning model that performs classification and bounding box regression directly from predefined anchor boxes without the stage of detecting object candidate region. In the mobile and embedded fields, methods of the single-stage scheme are mainly used due to operating speed issues, and a representative single-stage scheme is You Only Look Once (YOLO).

For services based on a server application environment in a C-ITS system, the demand for optimization technology is increasing to reduce response latency because multiple servers are involved in object detection to endpoints, and service performance qualities (low response latency & low detection accuracy vs. high response latency & high detection accuracy) may be categorized according to service purposes so that a customer may select an optimization level.

A service response based on the server application environment in the C-ITS system is processed largely in three steps: "1. object detection & result analysis delivery, 2. requested service process delivery, and 3. service reception." There are exemplary structures such as Table 4, although they differ in service type and purpose. Table 4 illustrates CCTV- and RSU-related service server-infrastructures.

**[Table 4]**

| Case# | brid ject Detection & Result Analysis Delivery | 2. Requested Service Process Delivery | 3. Service Reception |
|---|---|---|---|
| 1 | CCTV shooting/object recognition result (wired or wireless) | → LDM server (BSM/PSM message generation)→ Soft RSU cloud server (cloud RSU) → SoftV2X server | SoftV2X terminal (smartphone) |
| 2 | CCTV shooting/object recognition result | → Soft RSU (BSM/PSM generation - wired or wireless) → SoftV2X server | SoftV2X terminal (smartphone) |
| | | *Depending on whether a camera is installed in the RSU, V2X message processing is selected from 1) server generation (camera installed) or 2) RSU generation (camera not installed) | |
| 3 | CCTV shooting/object recognition result | video information storage and analysis (cloud) | service provision (smartphone) |
| 4 | CCTV shooting/object recognition result | video system (on-premise server) | remote monitoring (smartphone/PC) |

An object detection time may be affected by a function implementation method, the number of objects to be processed, the number of linked server points, and so on. However, as the number of objects to be processed with such attributes and data sizes increases, object detection data processing latency and traffic load will also increase. This may be overcome by optimizing the function implementation method or the number of linked server points, and various technologies are researched and developed to reduce the detection time for optimizing the function implementation method.

For object detection and scene segmentation to optimize a function implementation method, low latency, low power, and optimization of a computational amount are required, and for this purpose, the following requirements should be satisfied.

First, a feature extraction layer, which is used as a basic structure for extracting image features in a deep learning model, needs to be lightweight.

Second, optimization is required from the perspective of a deep learning model structure for object detection or object/scene segmentation. For example, for object detection, a structure for determining the location and type of an object needs to be lightweight, and for object/scene segmentation, a structure for segmentation needs to be lightweight. A time required for object detection in a typical actual service is 1 second or less, and for example, when video shooting and object recognition detection are processed in the same device, an object recognition detection time for one video frame may be about 200ms.

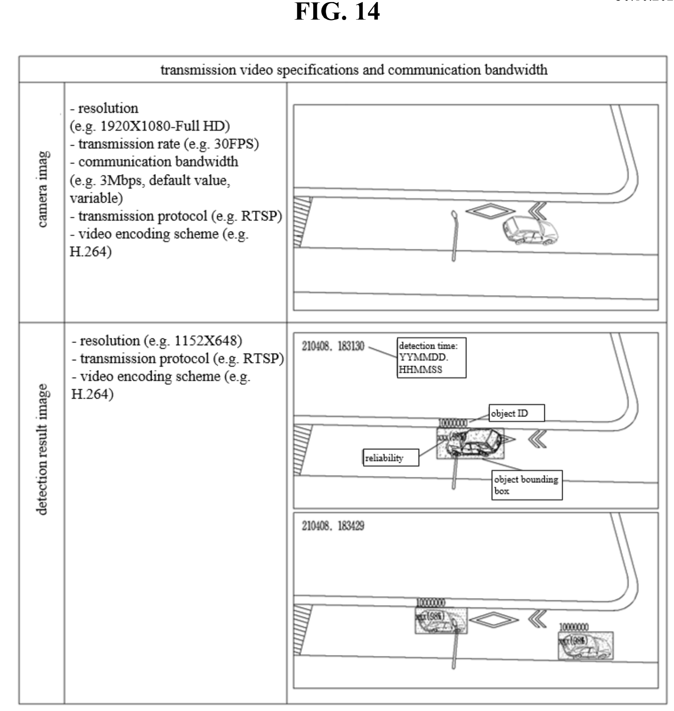

Further, when used in a typical traffic system or C-ITS, the object detection function should output detected data and a detected video, such as FIG. 14, from which time and physical property information about a detected object are determined, although it depends on an object detection implementation method. In conclusion, load factors that should be considered in a service using object detection in a typical ITS may include object detection latency, a detection data processing time, a data size, and a transmission bandwidth.

The types of data included in detection results may be identified from such an example as FIG. 14.

When it is assumed that a service using object detection is operated in an ITS environment, it is crucial to ensure that a system equipped with this function minimizes the impact of load factors (e.g., detected data processing time, data size, and transmission bandwidth) on ITS quality of service (QoS).

A load generated by object detection processing is a problem that needs to be solved from the perspective of the physical resources (e.g., processing speed, memory resources, power consumption, and heat generation) of the system. However, a structure where problem resolution is handled after a load problem occurs is bound to affect the ITS QoS, when the load problem initially occurs. When the ITS service being processed or planned is related to safety, this may lead to unexpected harm.

Therefore, a system with the object detection function operating in an ITS environment should be structurally designed or equipped with an operational process so as to prevent a load from occurring during a normal operation. For example, to prevent or minimize the load, it may be considered to implement the system to efficiently activate/deactivate the object detection function under specific conditions or priorities, or to process object detection only in a specific area of a video frame.

The present disclosure proposes priority conditions and their processing methods to prevent meaningless, continuous object detection operations and to enable efficient processing in a V2X RSU or related system that leads/executes the object detection process.

The proposed methods are expected to maintain the object detection-equipped system in a minimized load state, thereby ensuring ITS QoS and improving system longevity.

When an intelligent CCTV or RSU capable of video sensing object detection performs moving object detection in conjunction with a nearby smart RSU or server in a traditional ITS or cooperative C-ITS, performing constant object detection may cause a load and thus may not be efficient, as described before.

Therefore, to prevent meaningless, constant object detection and maintain the system with a minimal load from object detection/processing, the following priority conditions and their processing methods are proposed.
- When no object detection result event occurs for a specific time, the object detection function is deactivated, or object detection parameters (e.g., detection cycle increase (e.g., from every frame to 1 sec, 10 sec, 60 sec, ...) are changed/the conditions are relaxed.
- When occurrence of an event is identified through an external input (sensor information, V2X message reception, accident, road condition, Internet crawling, weather information reception, or the like), objects are intensively detected in an area where the event occurred.
- When object detection is impossible for a specific time, camera screen shot information is transmitted every specific period to a road operator or an accident collection/processing center.

### Requirements for Priority-Based Object Detection System

The proposed object detection system operates efficiently and prevents loads by not running continuously but instead by first recognizing and determining priorities and conditions, and then performing object detection in an on-demand manner.

A typical object detection system includes several components that work together to identify and locate an object in an image or video. However, the requirements for a system equipped with the object detection function to process the requirements proposed in the present disclosure are as follows.

### (1) Input

An object detection entity (e.g., CCTV, RSU, or the like) should be able to use images and video frames from areas with a detection priority as an input, regardless of whether objects support V2X communication.

When the object detection entity receives a V2X message of a V2X communication-enabled V2X transmitting or receiving terminal from the surroundings, this message should include essential data fields with physical attribute information (e.g., the location, speed, direction, length, and width of a moving vehicle). This physical attribute information may be detected with the same values during the object detection process, and its similarity may be verified by comparing it with information detected from the message.

The V2X transmitting or receiving terminal mentioned above refers to a terminal that transmits or receives a message in specific V2X use cases (e.g., basic safety, sensor sharing, maneuver coordination, and so on) including those that will be described later. Even for the same terminal, the transmission/reception operation may differ in each use case if multiple cases are running.

In addition to V2X messages, the object detection entity should be able to collect and use various sensor information (e.g., LiDAR, Radar, ultrasonic sensors, and so on), and Internet information (e.g., accidents, road conditions, web crawling, weather information reception, and so on) that may be received from the outside, for use in object detection.

### (2) Preprocessing

A preprocessing process for input data may be required to improve image quality through operations like resizing, normalization, and applying filters.

The (re)occurrence of objects may also be detected from an input image through image preprocessing, such as background subtraction and image differencing. It may also be determined whether to set a region of interest (ROI) and/or perform object detection or (re)activate the object detection function only in specific area(s) of the preprocessed image. For example, it may be considered to perform detection in the following manner.
- When the detection function is running: A differential image of an ROI (an entire area or priority area) may be used to recognize the presence of a moving object, and object detection may be performed for the recognized area.
- When the detection function is not running: Preprocessing (background subtraction and/or image differencing) is performed to detect a moving object to trigger the detection function.

### (3) Feature Extraction

A general object detection system uses a technique such as convolutional neural networks (CNN) or other feature extraction methods to extract related features from a preprocessed image. This function is used to capture important patterns and characteristics of objects.

In the case of an object supporting V2X communication, it should be located in a cover area where it may sense information about the location, movement, and state of an object (e.g. VRU or vehicle) that transmitted a received V2X message, and a specific distance around it. The V2X message may be collected through a long-range (e.g. Uu or IF) communication scheme as well as a short-range (e.g. DSRC or PC5) communication scheme, in the cover area.

The object detection entity may use a detected location or installed location as a reference point for relative positioning, and when an object is detected from data of a sensor installed in the object detection entity, the relative position of the object may be identified through preset information.

Similarly, the location of the object may be obtained by combining the location of the reference point and relative position information about the object. Recognized information and movement attribute information about the object may be detected by comparing the detected and acquired movement attribute information about the object with movement attribute information about the object received through a V2X message, and features may be extracted based on the information.

For an object that does not support V2X communication, the detection system should be able to detect the type, location, size, and direction of the object and a surrounding area at a specific distance from the object in an image/video frame by combining its built-in detection algorithm with relative positioning information like the example mentioned above.

According to the proposed priority processing method of the present disclosure, there may be two or more areas with different priorities in the process of searching object candidate regions (ROIs) in an image area. Therefore, computing resources may need to be divided for the areas according to these priorities to perform object detection.

In the above process, a feature may not be detected well at a specific point or area, making it meaningless to attempt image detection or generating incorrect detection results. For example, when an object supporting V2X communication transmits a V2X message at a specific location but is occluded by an obstacle, an (related or matching) image of the object may not be detected for a specific time period. When this phenomenon continues to occur in the same area due to multiple objects supporting V2X communication, the area may be determined as an undetectable area. More specifically, when a specific number (e.g. 100) of or more different objects are detected (or passed) at a specific point or area, and a specific percentage (e.g. 90%) or more of image detection (bounding box generation for an image of a related object) fails, this is recognized as a situation in which image detection is not possible in the area.

The above point or area information may be collected to form a specific undetectable/excluded area within the coverage area of a camera sensor. This undetectable/excluded area may be set to a lowest detection priority, and the detection of the area with the corresponding priority may be skipped or dropped, for processing efficiency.

This undetectable/excluded area may be partially or wholly changed again to be detectable, when detection obstacles are removed (e.g. structures or terrain features are removed or modified) or for other reasons. This may not be information that is updated in real time over a short period of time, but information that changes over a long period of time. As described above, information about a change in the undetectable/excluded area should be reflected to determine whether to perform detection, a detection priority, and so on. In addition, even in an area which has a very low detection priority and thus is excluded from detection, intermittent detection may be attempted to identify a change, or a detection test may be performed during management or calibration of an RSU CCTV/camera sensor. For example, when a detection-excluded area as described above is configured to be subject to a detection attempt in order to identify an update state periodically every T time (e.g. T=1), it may be identified whether an image related to corresponding objects (UEs) is detected while waiting for a specific time period until a specific number (e.g. k=10) of objects (UEs) occur every period (e.g. t0 + mT where m is an integer greater than 0) based on the start time (e.g. t0) of the corresponding operation. In this process, updated area information is reflected in the next operation, and from then on, image detection is attempted in a new area configuration and priority setting state.

When attributes of the area, such as the detection priority, are (re)determined or detection resumes in the area by counting objects detected over the specific period, a threshold for the count may differ depending on the type of the area, as in the following examples.
- High priority (e.g., high-risk area) k = 3
- Low priority (e.g., low-risk area or pedestrian-only area) k = 10

For example, even if a high-priority area temporarily becomes an undetectable/excluded area due to no object detection or impossible object detection, objects should still be detected in this area as much as possible. Therefore, even if only a small number of objects are detected during a predetermined period in the detection-excluded state, this area may be (re)configured to be subject to resumption of the normal detection function.

When the detection entity or target system determines that the importance of objects expected to be detected in a detection area is low, it may skip or drop the detection of some objects. For example, in the case where it is necessary to continuously track and update information about objects already detected, rather than detecting a specific area, or to maintain detection on the assumption of the same attribute information, when it is determined that an object has a low importance, detection may no longer be performed, or the priority of detection may be lowered for an area where many of these objects are distributed, for the efficiency of the distributed computing structure.

Although the undetectable area and the detection-excluded area may have the same detection priority, they may also have different or independent detection priorities. That is, detection deactivation and detection exclusion may be the same concept or not.

For example, when an area is determined to be (temporarily) undetectable due to the surrounding environment, but object detection in the area is very important for traffic safety, information about objects should be acquired and transmitted as much as possible, for example, by using information from V2X communication as mentioned above. Alternatively, even if detection via a CCTV is impossible, information from other remaining sensors may be integrated to substitute for it.

### (4) Object Localization

The extracted features are used to identify the presence and locations of objects in the image. This is typically done by applying a bounding box around each detected object.

### (5) Classification

Once the presence of objects are identified, the system should classify them into various categories or classes. This step involves assigning a label, such as 'person,' 'car,' or 'cat,' to the detected objects. This may be performed using a machine learning algorithm such as support vector machines (SVMs) or a deep learning model.

### (6) Post-processing

The object detection system may perform an additional post-processing step to refine the object detection results. This may include false detection filtering, adjusting bounding box coordinates, and applying non-maximum suppression to eliminate duplicate detections.

The similarity between physical attribute information about an object, detected from the two paths of message reception and remote sensing object detection may be analyzed. When the physical attribute information is determined to be similar, the process proceeds to a detection result data generation & transmission process, whereas when it is determined to be not similar, a re-detection opportunity may be added and a comparison may be performed again. However, when an object recognition re-detection opportunity is added every time an error occurs, latency may occur as much, which should also be considered in an overall processing time.

An object detection time varies greatly depending on the number of objects to be detected, the applied object detection algorithm, and HW performance. The evaluation target detection time set in a research project on moving object detection (Urban Autonomous Cooperative Driving Safety & Infrastructure Research Project, Intersection Mobile Object Information Collection Technology Development/Mobile Object Detection Performance Evaluation) is cited as 200ms, from which it may be expected that even a few allowed re-detections cause a delay of several hundred milliseconds to a few seconds. An acceptable delay value in a high-priority detection area may be set higher than in a low-priority area, and even when detection of a specific object or acquisition of its identification information (e.g., ID, location information, and so on) is successful by combining V2X communication information or information acquired from other sensors or network entities, the detection may be considered successful.

### (7) Output

A final output of the object detection system may include the detected objects and their labels and bounding box coordinates.

### Proposed Priority Processing Structure & Method

Priority conditions and methods for preventing a constant object detection and processing operation and processing object detection efficiently are as follows.
(1) When no event occurs for a specific time or an area is identified as a detection-excluded area, the object detection function is deactivated or object detection parameters are changed.

After an initial system operation, object detection is performed. When there are no meaningful event detection information acquisition results for a specific time or a specified number of times or more times, the object detection entity should be able to deactivate the object detection function or switch to sleep mode to prevent unnecessary consumption of physical system resources.

Alternatively, it may adjust/relax object detection parameters to conserve physical system resources. For example, it may be considered to increase the detection cycle (e.g., from every frame to 1 sec, 10 sec, 60 sec, ..) to perform object detection less frequently.

(2) Upon identification of the occurrence of an event through an external input (sensor information, V2X message reception, accident, road condition, Internet crawling, and weather information reception), intensive object detection is performed in an area where the event occurred.

The object detection entity should collect external input information rather than performing object detection and extract features from an image or video frame, centering on the location and surrounding geographical information of the event, by identifying the event and determining whether object detection is required from the collected information.

Examples of the types of external input information and their processing methods are as follows:

### (i) LiDAR (Light Detection and Ranging)

A LiDAR sensor may use laser beams to measure distances and create high-resolution 3D map information about the surroundings. Further, it may accurately detect objects and their distances.

LiDAR information may be used to predict an event like a vehicle collision and a lane departure.

### (ii) Radar (Radio Detection and Ranging)

A Radar sensor may use radio waves to detect objects and measure their distances, speeds, and directions. It may predict an event like a vehicle collision and a lane departure.

### (iii) Ultrasonic Sensor

It uses sound waves to detect objects and measure their distances. It may predict an event occurring in a blind spot.

### (iv) Audio/Noise Sensor

It may collect noise and audio data, and predict danger upon occurrence of a noise event exceeding a specific dB level.

### (v) V2X Message

It enables communication between a vehicle and infrastructure using a short range (e.g., WAVE, DSRC, or PC5) or cellular (e.g., Uu IF) network. This allows vehicles to exchange information about their locations, speeds, and intent. In addition, direct accident risks, road events (e.g., RSA, TIM, and so on), and vehicle emergency statuses may be collected along with physical attribute information, thereby enabling accurate prediction for object detection.

### (vi) Other Internet-Sourced Information

An event occurring in an area covered by the object detection system may be obtained in real time using an open API, a rest API, a message protocol, or web crawling, and used to predict danger.

When an event is no longer detected through such an external input, the area may become a detection-excluded area again. That is, external input information may be used in a complementary manner with existing detected information to identify whether an event has occurred and to determine whether to set the area as a detection-excluded area.

(3) When object detection is impossible for a specific time, camera screen shot information is transmitted every specific period to a road operator or an accident collection/processing center.

For example, in a cellular-based ITS environment with a CCTV or RSU equipped with the object detection function for a specific service based on a server application environment, when unnecessary object detection processes need to be efficient, the activation/deactivation of the object detection process may be controlled solely by priority conditions without a load balancing process.

This solves problems related to the physical resources (e.g., processing speed, memory resources, power consumption, heat generation, and so on) of the system, and prevents indirect impacts caused by load problems.

Table 5 below illustrates an example of the object detection processing method for a specific image area by priority.

**[Table 5]**

| | |
|---|---|
| 1 | Perform object detection |
| 2 | If no object detection result event occurs for a specific time, deactivate the object detection function (or change object detection parameters/relax conditions) |
| 3 | Receive an external event input and identify that an event has occurred |
| 4 | Perform intensive object detection in the event area |
| 5 | If object detection is impossible for a specific period, periodically send camera screen shot information to the road operator or accident collection/processing center |

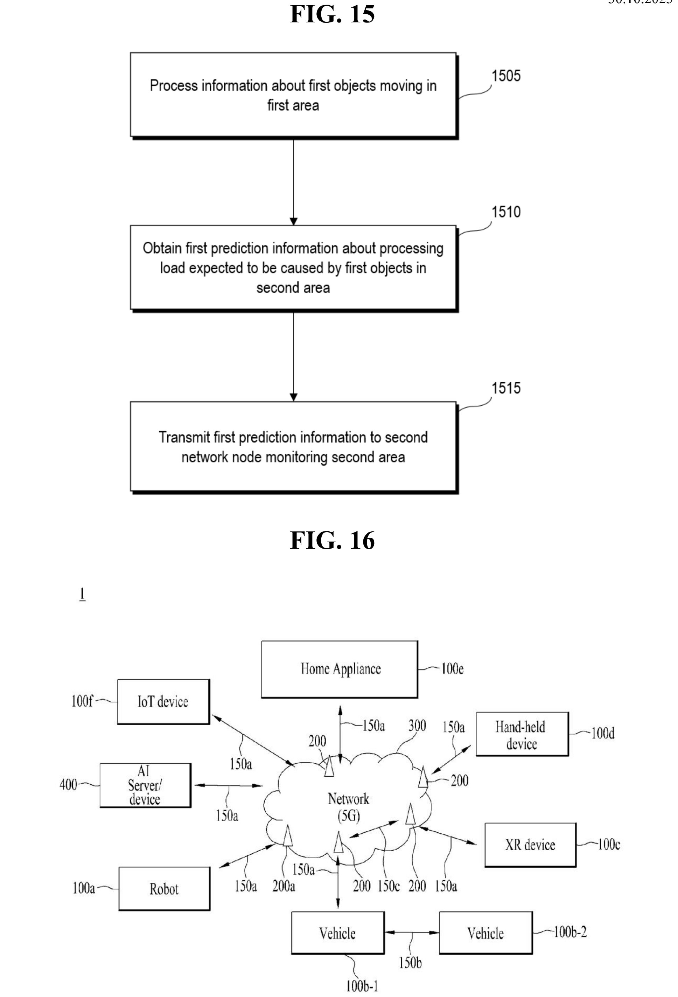

FIG. 15 illustrates a method for transmitting information to a second network node by a first network node in an ITS.

Referring to FIG. 15, the first network node may process information regarding first objects moving in a first area monitored by it (1505).

Based on a result of the processing, the first network node may obtain first prediction information regarding a processing load expected to be caused by the first objects in a second area at least partially contacting the first area (1510).

The first network node may transmit the first prediction information to a second network node that monitors the second area (1515).

The first network node may receive second prediction information from the second network node.

The second prediction information may be about a processing load expected to be caused by second objects moving in the second area, with respect to the first area.

Based on the second prediction information, processing resources of the first network node may be adjusted.

The processing resources may include at least one of a central processing unit (CPU) for cloud computing, random access memory (RAM), network speed, or a storage access speed.

The processing load expected to be caused by the second objects with respect to the first area may be calculated based on at least one of a location, direction, speed, or detection priority of each of the second objects, which is obtained from the second prediction information.

The first prediction information may be related to a processing load expected to be caused by the first objects within a time duration less than a threshold from a current time.

The first objects may include at least one of a terminal, a vehicle, or an RSU, moving in the first area.

Based on a first event related to object detection not occurring in the first area for a specific time, the monitoring of the first area by the first network node may be deactivated.

After deactivating the monitoring of the first area, the first network node may receive sensing information related to the first area from an external device.

Based on a second event being detected through the sensing information, the monitoring of the first area by the first network node may be resumed.

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 16 illustrates a communication system applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

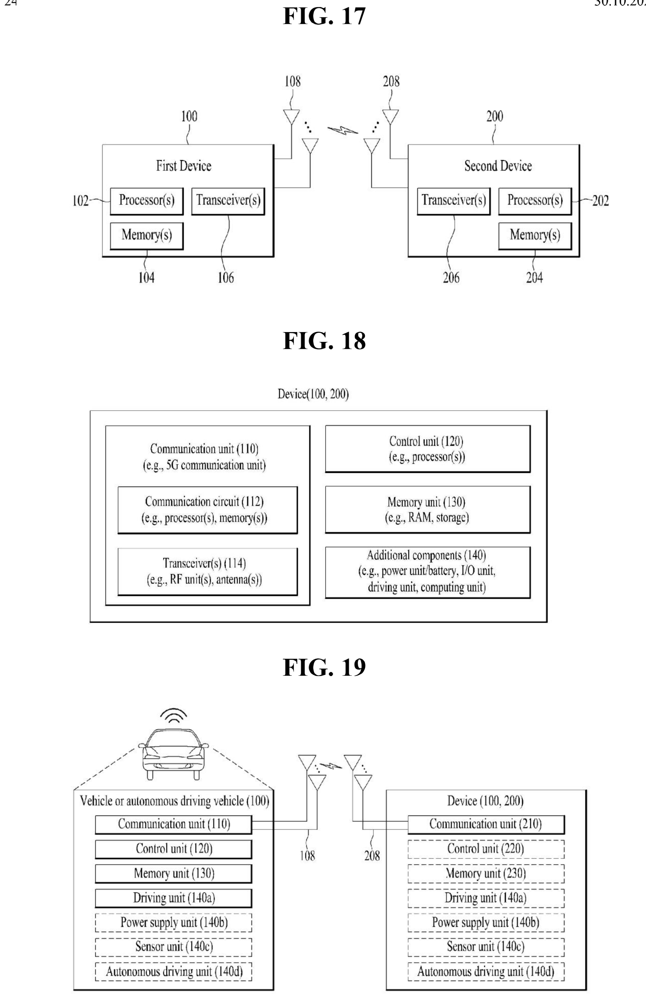

FIG. 17 illustrates a wireless device applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, a UE may include the processor(s) 102 connected to the RF transceiver and the memory(s) 104. The memory(s) 104 may include at least one program for performing operations related to the embodiments described above with reference to FIGS. 11 to 27.

Alternatively, a chipset including the processor(s) 102 and memory(s) 104 may be configured. The chipset may include: at least one processor; and at least one memory operably connected to the at least one processor and configured to, when executed, cause the at least one processor to perform operations.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 18 illustrates another example of a wireless device applied to the present disclosure. The wireless device may be implemented in various forms according to a use-case/service (refer to FIG. 16)

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various apparatuses in ITS.

## Claims

1. A method for transmitting information to a second network node by a first network node in an intelligent transportation system (ITS), the method comprising:
processing information regarding first objects moving in a first area monitored by the first network node;
based on a result of the processing, obtaining first prediction information regarding a processing load expected to be caused by the first objects in a second area at least partially contacting the first area; and
transmitting the first prediction information to the second network node monitoring the second area.

2. The method of claim 1, further comprising:
receiving second prediction information from the second network node,
wherein the second prediction information is about a processing load expected to be caused by second objects moving in the second area, with respect to the first area.

3. The method of claim 2, further comprising:
adjusting processing resources of the first network node based on the second prediction information.

4. The method of claim 3, wherein the processing resources include at least one of a central processing unit (CPU) for cloud computing, random access memory (RAM), a network speed, or a storage access speed.

5. The method of claim 1, wherein the processing load expected to be caused by the second objects with respect to the first area, is calculated based on at least one of a location, direction, speed, or detection priority of each of the second objects, obtained from the second prediction information.

6. The method of claim 1, wherein the first prediction information relates to a processing load expected to be caused by the first objects within a time duration less than a threshold from a current time.

7. The method of claim 1, wherein the first objects include at least one of a terminal, a vehicle, or a road side unit (RSU), moving in the first area.

8. The method of claim 1, wherein based on a first event related to object detection not occurring in the first area for a specific time, the monitoring of the first area by the first network node is deactivated.

9. The method of claim 8, wherein the first network node receives sensing information related to the first area from an external device, after the deactivation of the monitoring of the first area.

10. The method of claim 9, wherein based on a second event being detected through the sensing information, the monitoring of the first area by the first network node is resumed.

11. A computer-readable recording medium recorded thereon a program for performing the method of claim 1.

12. A first network node operating in an intelligent transportation system (ITS), the first network node comprising:
a memory storing instructions; and
a processor performing operations by executing the instructions,
wherein the operations of the processor include:
processing information regarding first objects moving in a first area monitored by the first network node;
based on a result of the processing, obtaining first prediction information regarding a processing load expected to be caused by the first objects in a second area at least partially contacting the first area; and
transmitting the first prediction information to a second network node monitoring the second area.

13. The first network node of claim 12, wherein the first network node is a server that monitors a terminal, a vehicle, or a road side unit (RSU), moving in the first area.
